# EUROPEAN PATENT APPLICATION

(11) **EP 4 657 578 A1**
(43) Date of publication of application: **03.12.2025**
(21) Application number: 25152021.9
(22) Date of filing: 15.01.2025
(51) Int. Cl.: H01M 8/04029, H01M 8/04119, H01M 8/04228, H01M 8/04223, H01M 8/0267

(54) **FUEL CELL SYSTEM**

(30) Priority: 28.05.2024 JP 2024086586
(71) Applicant: Kabushiki Kaisha Toshiba, Minato-ku Tokyo (JP); Toshiba Energy Systems & Solutions Corporation, Saiwai-ku Kawasaki-shi Kanagawa (JP)
(72) Inventor: Yamashita, Kyohei, Kawasaki-shi, Kanagawa (JP)
(74) Representative: Hoffmann Eitle

(57) **Abstract**

A fuel cell system according to an embodiment includes a fuel cell stack, an oxidant gas supply and drive unit, an oxidant gas discharge line, a first gas pressure regulation unit, a sealable humidifying water tank, a humidifying water supply line, and a humidifying water discharge line. The humidifying water tank is connected to a part of the oxidant gas discharge line, which is upstream of the first gas pressure regulation unit, and stores humidifying water to be supplied to the fuel cell stack. The humidifying water supply line supplies the humidifying water from the humidifying water tank to the fuel cell stack. The humidifying water discharge line discharges the humidifying water from the fuel cell stack outside the fuel cell system.

## Description

### FIELD

Embodiments described herein relate generally to a fuel cell system.

### BACKGROUND

A fuel cell system including a fuel cell stack in which a fuel electrode, a solid polymer electrolyte membrane, an oxidant electrode, and a separator are stacked is known. The fuel cell stack is supplied with a fuel gas containing hydrogen and an oxidant gas such as air, to generate power. Management of moisture inside the fuel cell stack is effective for developing the performance of the fuel cell stack. Humidifying water is supplied to the fuel cell stack in order for the management of moisture.

In the internal humidification method known as one of the methods of managing moisture inside a fuel cell stack, the inside of the fuel cell stack is humidified via a separator. In this case, a path through which humidifying water flows (humidifying water path) and a path through which an oxidant gas flows (oxidant gas path) are separated by a separator formed of a conductive porous plate with microapertures. Thus, some of the humidifying water flowing through the path of the separator passes through the separator into the oxidant gas path to humidify the oxidant gas. On the other hand, excessive water generated by power generation (generated water) can be moved from the oxidant gas path to the humidifying water path through the separator. In addition, when a path through which the fuel gas flows (fuel gas path) and the path through which the humidifying water flows is separated by the separator formed of a conductive porous plate, the fuel gas flowing through the fuel gas path and be humidified and the excessive generated water can also be removed.

Since the humidifying water recovers heat during the power generation of the fuel cell stack, some of the humidifying water evaporates. Thus, evaporative latent heat of the water can cool the fuel cell stack. Further, since sensible heat of the humidifying water can also cool the fuel cell stack, cooling function of the fuel cell stack is sometimes enhanced by increasing a flow rate of a humidifying water system.

The humidifying water passes through the separator formed of a conductive porous plate and comes into contact with a fuel electrode and an oxidant electrode. In order to prevent deterioration of performance of each electrode, deionized water without impurities is used as the humidifying water.

However, when an ambient temperature drops below a freezing point during shutdown of the fuel cell system, the humidifying water remaining inside the fuel cell stack and the humidifying water system may freeze and expand, because the humidifying water is deionized water. In this case, pipes and various devices constituting the fuel cell stack and the humidifying water system may possibly be damaged.

### BRIEF DESCRIPTION OF THE DRAWINGS

Fig. 1 is a view showing a fuel cell system according to a first embodiment.
Fig. 2 is a partial cross-unital view showing a fuel cell stack shown in Fig. 1.
Fig. 3 is a view showing a modification example of the fuel cell system shown in Fig. 1.
Fig. 4 is a view showing another modification example of the fuel cell system shown in Fig. 1.
Fig. 5 is a view showing another modification example of the fuel cell system shown in Fig. 1.
Fig. 6 is a view showing another modification example of the fuel cell system shown in Fig. 1.
Fig. 7 is a view showing a fuel cell system according to a second embodiment.
Fig. 8 is a view showing a modification example of the fuel cell system shown in Fig. 7.
Fig. 9 is a view showing another modification example of the fuel cell system shown in Fig. 7.
Fig. 10 is a view showing another modification example of the fuel cell system shown in Fig. 7.

### DETAILED DESCRIPTION

A fuel cell system according to an embodiment comprises: a fuel cell stack to which a fuel gas and an oxidant gas are supplied to generate power; an oxidant gas supply and drive unit that supplies the fuel cell stack with the oxidant gas; an oxidant gas discharge line that discharges the oxidant gas from the fuel cell stack; a first gas pressure regulation unit; a sealable humidifying water tank; a humidifying water supply line; and a humidifying water discharge line. The first gas pressure regulation unit regulates a pressure of the oxidant gas in the oxidant gas discharge line. The humifying water tank is connected to a part of the oxidant gas discharge line, which is upstream of the first gas pressure regulation unit, and stores humidifying water to be supplied to the fuel cell stack. The humidifying water supply line supplies the humidifying water from the humidifying water tank to the fuel cell stack. The humidifying water discharge line discharges the humidifying water from the fuel cell stack outside the fuel cell system.

Embodiments are described herebelow with reference to the drawings.

### (First Embodiment)

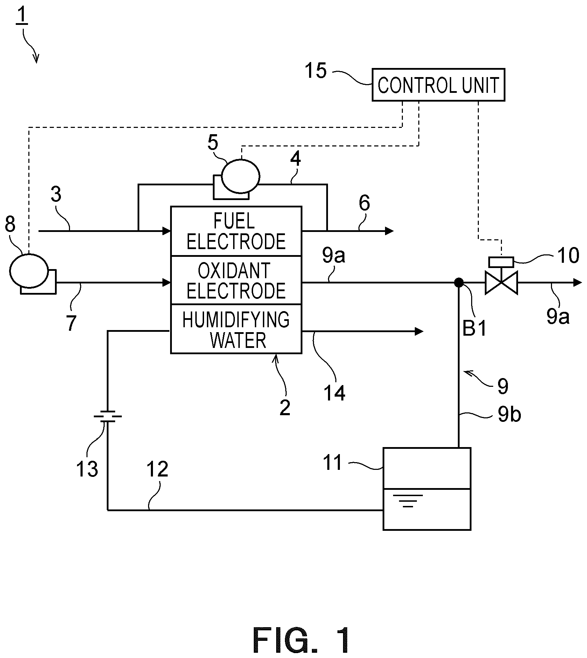

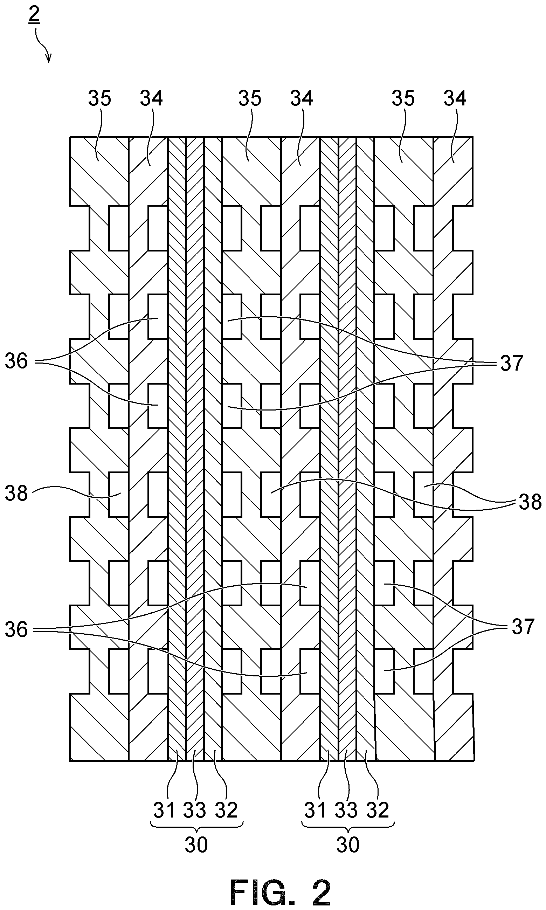

A fuel cell system 1 according to a first embodiment is described using Figs. 1 and 2. The fuel cell system 1 according to this embodiment may be installed in a building or mounted on a mobile vehicle, for example. Examples of buildings include condominiums, office buildings, factories, commercial facilities, etc. In this case, electric power generated by the fuel cell system 1 may be used to drive elevators, to light and/or air condition the inside of the building. Examples of mobile vehicles include ships, automobiles, railcars, etc. In this case, electric power generated by the fuel cell system 1 may be used to drive the mobile vehicle, to light and/or air condition the inside of the mobile vehicle.

As shown in Fig. 1, the fuel cell system 1 includes a fuel cell stack 2, a fuel gas supply line 3, a fuel gas circulation line 4, a circulation blower 5, a degassing line 6, an oxidant gas supply line 7, an oxidant gas blower 8, an oxidant gas discharge line 9, a first gas pressure regulation valve 10, a humidifying water tank 11, a humidifying water supply line 12, a pressure loss unit 13, a humidifying water discharge line 14, and a control unit 15.

The fuel cell stack 2 is configured to generate power using a fuel gas and an oxidant gas. The fuel gas may be a hydrogen gas, a mixed gas containing a hydrogen gas, etc. The oxidant gas may be air, etc.

As shown in Fig. 2, the fuel cell stack 2 has a stack structure in which a plurality of cells 30 are stacked. Each cell 30 includes a fuel electrode 31 (anode), an oxidant electrode 32 (cathode), and an electrolyte membrane 33 interposed between the fuel electrode 31 and the oxidant electrode 32. The cell 30 is referred to also as membrane electrode assembly (MEA). The fuel gas supplied to the fuel electrode 31 and the oxidant gas supplied to the oxidant electrode 32 react electrochemically through the electrolyte membrane 33. This converts chemical energy into electrical energy, and the fuel cell stack 2 can generate power.

The cells 30 are stacked through a first separator 34 and a second separator 35. Namey, the cell 30, the first separator 34, and the second separator 35 are stacked in this order. The first separator 34 and the second separator 35 are formed of conductive porous plates with microapertures. A fuel gas path 36 through which the fuel gas flows is formed in one surface of the first separator 34. The fuel gas path 36 is in contact with the fuel electrode 31. An oxidant gas path 37 through which the oxidant gas flows is formed in one surface of the second separator 35. The oxidant gas path 37 is in contact with the oxidant electrode 32. A humidifying water path 38 is formed in the other surface of the second separator 35. The humidifying water path 38 is in contact with the first separator 34.

As shown in Fig. 1, the fuel gas supply line 3 supplies the fuel gas stored in a fuel tank, not shown, to the fuel gas path 36 (see Fig. 2) of the fuel cell stack 2. The fuel tank stores the high-pressure fuel gas. the fuel gas supply line 3 is connected to the fuel gas path 36 through a fuel inlet manifold, not shown.

The fuel gas circulation line 4 is configured to return the fuel gas discharged from the fuel gas path 36 of the fuel cell stack 2 to the fuel gas path 36. An upstream end of the fuel gas circulation line 4 is connected to the fuel gas path 36 through a fuel outlet manifold, not shown, and a downstream end of the fuel gas circulation line 4 is connected to the aforementioned fuel gas supply line 3. In this case, the fuel gas discharged from the fuel gas path 36 can be supplied to the fuel gas supply line 3 to recycle the fuel gas. The fuel gas circulation line 4 may be provided with the circulation blower 5. The circulation blower 5 is configured to draw in the fuel gas from the fuel gas path 36 and to feed the fuel gas to the fuel gas supply line 3.

The degassing line 6 is configured to discharge the fuel gas from the fuel gas circulation line 4 outside the fuel cell system 1. Although not shown, the degassing line 6 is provided with a degassing valve. When the degassing valve is opened under a predetermined condition, the fuel gas is discharged outside the fuel cell system 1.

The oxidant gas supply line 7 supplies the oxidant gas such as air to the oxidant gas path 37 (see Fig. 2) of the fuel cell stack 2. The oxidant gas supply line 7 is connected to the oxidant gas path 37 through an oxidant inlet manifold, not shown.

The oxidant gas blower 8 is an example of an oxidant gas supply and drive unit. The oxidant gas blower 8 is provided on the oxidant gas supply line 7. The oxidant gas blower 8 is configured to supply the oxidant gas to the oxidant gas path 37 and to discharge the oxidant gas from the oxidant gas path 37 to the oxidant gas discharge line 9. The oxidant gas blower 8 may be a centrifugal blower, a roots blower, or a compressor, for example.

The oxidant gas discharge line 9 discharges the oxidant gas from the oxidant gas path 37 of the fuel cell stack 2. The oxidant gas discharge line 9 is connected to the oxidant gas path 37 through an oxidant outlet manifold, not shown. The oxidant gas is discharged outside the fuel cell system 1.

The oxidant gas discharge line 9 according to this embodiment includes a discharge main line 9a and a branch line 9b. The discharge main line 9a discharges the oxidant gas from the oxidant gas path 37 of the fuel cell stack 2 outside the fuel cell system 1. The discharge main line 9a may include an outlet port (not shown) through which the oxidant gas is discharged outside the fuel cell system 1. The branch line 9b branches off from the discharge main line 9a to be connected to the humidifying water tank 11. The branch line 9b connects the discharge main line 9a and the humidifying water tank 11. The humidifying water tank 11 is pressurized by a pressure of the oxidant gas in the branch line 9b. The pressure of the oxidant gas in the branch line 9b is equal to a pressure of the oxidant gas in a part of the discharge main line 9a, which is upstream of the first gas pressure regulation valve 10, and is regulated by the first gas pressure regulation valve 10.

The first gas pressure regulation valve 10 is an example of a first gas pressure regulation unit. The first gas pressure regulation valve 10 regulates a pressure of the oxidant gas in the oxidant gas discharge line 9. In this embodiment, the first gas pressure regulation valve 10 is located on the discharge main line 9a at a position downstream of a branch point B1 from which the branch line 9b branches off. The first gas pressure regulation valve 10 regulates a pressure of the oxidant gas in a part of the discharge main line 9a, which is upstream of the first gas pressure regulation valve 10, and a pressure of the oxidant gas in the branch line 9b. Other examples of the first gas pressure regulation unit may be an orifice, a turbine for recovering power of the oxidant gas, etc., for example.

The humidifying water tank 11 stores humidifying water to be supplied to the fuel cell stack 2. The humidifying water tank 11 is a sealable tank. The humidifying water tank 11 is connected to the oxidant gas discharge line 9 at a position upstream of the first gas pressure regulation valve 10. The humidifying water tank 11 in this embodiment is connected to the branch line 9b of the oxidant gas discharge line 9. A gas phase of the oxidant gas is present in the humidifying water tank 11. Thus, the humidifying water stored in the humidifying water tank 11 is pressurized by a pressure of the oxidant gas in the branch line 9b. The humidifying water tank 11 may be refilled with humidifying water which is supplied from a humidifying supply unit, not shown. An example of the humidifying water supply unit may be a tank storing deionized water (not shown), in addition to an oxidant gas cooling apparatus 20 described later. Another example of the humidifying water supply unit may be an apparatus that can supply tap water from which impurities have been removed by means of a filter, an ion exchange resin, etc. The humidifying water is also used as water to internally humidify the fuel cell stack 2, and is referred to also as water management water.

The humidifying water supply line 12 supplies the humidifying water from the humidifying water tank 11 to the humidifying water path 38 (see Fig. 2) of the fuel cell stack 2. The humidifying water supply line 12 is connected to the humidifying water path 38 through a humidifying water inlet manifold, not shown. Since the humidifying water is pressurized at a pressure higher than the atmospheric pressure by means of a pressure of the oxidant gas in the branch line 9b, the humidifying water is supplied to the fuel cell stack 2 under the pressurized force. The humidifying water supply line 12 may not be provided with a pump for supplying the humidifying water to the humidifying water path 38.

The pressure loss unit 13 is provided on the humidifying water supply line 12. The pressure loss unit 13 reduces a pressure of the humidifying water supplied from the humidifying water tank 11 to the fuel cell stack 2. The pressure loss unit 13 loses the pressure of the humidifying water to reduce the pressure of the humidifying water. The pressure loss unit 13 may include an orifice, for example, which reduces the pressure of the humidifying water. Alternatively, the pressure loss unit 13 may include a pressure regulation valve, such as a needle valve, which reduces the pressure of the humidifying water.

The humidifying water discharge line 14 discharges the humidifying water from the humidifying water path 38 of the fuel cell stack 2 outside the fuel cell system 1. The humidifying water discharge line 13 is connected to the humidifying water path 38 through a humidifying water outlet manifold, not sown. The humidifying water discharge line 14 may include an outlet port (not sown) through which the humidifying water is discharged outside the fuel cell system 1. The humidifying water discharge line 14 may be provided with a check valve (not shown) to prevent back flow of the humidifying water.

The control unit 15 controls the aforementioned circulation blower 5, the oxidant gas blower 8, and the first gas pressure regulation valve 10. The control unit 15 may control the circulation blower 5, the oxidant gas blower 8, and the first gas pressure regulation valve 10 based on an operation condition of the fuel cell system 1.

Next, an operation of the fuel cell system 1 according to this embodiment as structured above is described.

During an operation of the fuel cell system 1, the fuel gas is supplied from the fuel gas supply line 3 to the fuel gas path 36 of the fuel cell stack 2, and the oxidant gas is supplied from the oxidant gas supply line 7 to the oxidant gas path 37 of the fuel cell stack 2. The fuel gas in the fuel gas path 36 flows in contact with the fuel electrode 31. The oxidant gas in the oxidant gas path 37 flows in contact with the oxidant electrode 32. Thus, the fuel gas and the oxidant gas react electrochemically, and the fuel cell stack 2 generates power.

The fuel gas having passed through the fuel gas path 36 is discharged to the fuel gas circulation line 4. The fuel gas flows from the fuel gas circulation line 4 to be again supplied to the fuel gas path 36 of the fuel cell stack 2 through the fuel gas supply line 3.

The oxidant gas having passed through the oxidant gas path 37 is discharged to the oxidant gas discharge line 9 and is discharged outside the fuel cell system 1 through the discharge main line 9a. Some of the oxidant gas, which has been discharged to the oxidant gas discharge line 9, is supplied to the branch line 9b. A pressure of the oxidant gas in the branch line 9 is regulated by the first gas pressure regulation valve 10. Thus, the gas phase of the oxidant gas in the humidifying water tank 11 is pressurized at a desired pressure. The gas phase in the humidifying water tank 11 is pressurized at a pressure P1 higher than the atmospheric pressure. In this case, both a pressure of the oxidant gas in a part of the discharge main line 9a, which is upstream of the first gas pressure regulation valve 10, and a pressure of the oxidant gas in the branch line 9b become substantially P1. A pressure of the oxidant gas in the oxidant gas path 37 of the fuel cell stack 2 also becomes substantially P1.

During the operation of the fuel cell system 1, the humidifying water is supplied from the humidifying water tank 11 to the humidifying water path 38 of the fuel cell stack 2. The humidifying water in the humidifying water tank 11 is subjected to the aforementioned pressure P1 to be supplied from the humidifying water tank 11 to the humidifying water supply line 12. A pressure of the humidifying water in the humidifying water supply line 12 is reduced by the pressure loss unit 13 through which the humidifying water passes. When a reduced pressure of the humidifying water is referred to as P2, P2 is lower than the aforementioned pressure P1. The humidifying water is supplied to the humidifying water path 38 at the pressure P2.

Namely, the pressure P2 of the humidifying water flowing through the humidifying water path 38 is lower than the pressure P1 of the oxidant gas fin the oxidant gas path 37. This can suppress movement of the humidifying water to the oxidant gas path 37 through the second separator 35. In this case, the oxidant gas path 37 can be prevented from being blocked by the humidifying water, and the electrochemical reaction at the oxidant electrode 32 can be prevented from being impaired.

The humidifying water manages moisture inside the fuel cell stack 2 while it flows through the humidifying water path 38. For example, when a humidify to the fuel gas flowing through the fuel gas path 36 is low, moisture moves from the humidifying water to the fuel gas path 36 though the first separator 34 so that the fuel gas is humidified. Similarly, when a humidity of the oxidant gas flowing through the oxidant gas path 37, moisture moves from the humidifying water to the oxidant gas path 37 through the second separator 35. Further, water generated by power generation moves from the oxidant gas path 37 to the humidifying water path 38 to remove the excessive water.

The humidifying water having passed through the humidifying water path 38 is discharged to the humidifying water discharge line 14. The humidifying water in the humidifying water discharge line 14 is discharged outside the fuel cell system 1 from an outlet port, not shown.

A case where the operation of the fuel cell system 1 is stopped is described.

Even when the operation of the fuel cell system 1 is stopped, the oxidant gas blower 8 may continuously supply the oxidant gas under the control of the control unit 15. Thus, a pressure of the gas phase in the humidifying water tank 11 is maintained, and the humidifying water is supplied from the humidifying water tank 11 to the humidifying water supply line 12. When the supply of the humidifying water from the humidifying water supply unit, not shown, to the humidifying water tank 11 is stopped, an amount of the water stored in the humidifying water tank 11 gradually decreases, and finally no humidifying water is supplied from the humidifying water tank 11 to the humidifying water supply line 12. Thereafter, the oxidant gas is supplied from the humidifying water tank 11 to the humidifying water supply line 12 by a pressure of the gas phase in the humidifying water tank 11. Thus, the humidifying water is discharged from the humidifying water supply line 12, the humidifying water path 38 of the fuel cell stack 2, and the humidifying water discharge line 14.

Alternatively, before the operation of the fuel cell system 1 is stopped, the supply of the humidifying water from the humidifying water supply unit, not shown, may be stopped, or an amount of the humidifying water supplied thereto may be decreased. In this case, an amount of the humidifying water stored in the humidifying water tank 11 decreases. Thereafter, when the operation of the fuel cell system 1 is stopped, the oxidant gas is supplied from the humidifying water tank 11 to the humidifying water supply line 12 by a pressure of the gas phase in the humidifying water tank 11. Thus, the humidifying water is discharged from the humidifying water supply line 12, the humidifying water path 38 of the fuel cell stack 2, and the humidifying water discharge line 14.

Also in a case where no humidifying water is supplied from the humidifying water tank 11 to the humidifying water supply line 12 any more, a certain amount of the humidifying water, which is not supplied to the humidifying water supply line 12, may be stored in the humidifying water tank 11. For example, when an outlet port of the humidifying water tank 11 to the humidifying water supply line 12 is located higher than a tank bottom surface, a certain amount of the humidifying water is stored. The control unit 15 may stop the oxidant gas blower 8 after a predetermined period of time has passed since the supply of the humidifying water from the humidifying water tank 11 to the humidifying water supply line 12 stopped. In this case, the humidifying water can be effectively discharged from the humidifying water supply line 12, the humidifying water path 38, and the humidifying water discharge line 14 by purge with the oxidant gas.

According to this embodiment, the humidifying tank 11 is connected to a part of the oxidant gas discharge line 9, which is upstream of the first gas pressure regulation valve 10, and the first gas pressure regulation valve 10 regulates a pressure of the oxidant gas in the oxidant gas discharge line 9. This allows the oxidant gas to be supplied at a pressure higher than the atmospheric pressure to be supplied to the humidifying water line 12 through the humidifying water tank 11. Thus, the humidifying water can be discharged outside the fuel cell system 1 from the humidifying water supply line 12, the humidifying water path 38, and the humidifying water discharge line 14 by using the pressure of the oxidant gas. As a result, the humidifying water can be discharged from the fuel cell stack 2, so that the fuel cell stack 2 can be prevented from being damaged by freezing and expansion of the humidifying water.

In addition, according to this embodiment, a pressure of the humidifying water supplied from the humidifying water tank 11 to the humidifying water path 38 of the fuel cell stack 2 is reduced by the pressure loss unit 13. This allows a pressure of the humidifying water flowing through the humidifying water path 38 to be lower than a pressure of the oxidant gas in the oxidant gas path 37. This can suppress movement of the humidifying water to the oxidant gas path 37. In this case, the oxidant gas path 37 can be prevented from being blocked by the humidifying water, and the electrochemical reaction at the oxidant electrode 32 can be prevented from being impaired.

In addition, according to this embodiment, the oxidant gas discharge line 9 includes the discharge main line 9a that discharges the oxidant gas from the fuel cell stack 2 outside the fuel cell system 1, and the branch line 9b that branches off from the discharge main line 9a to be connected to the humidifying water tank 11. The first gas pressure regulation valve 10 is located on the discharge main line 9a at a position downstream of the branch point B1 from which the branch line 9b branches off. This can simplify a discharge route of the oxidant gas to reduce pressure loss. This can improve discharge efficiency of the oxidant gas to improve power generation efficiency of the fuel cell stack 2.

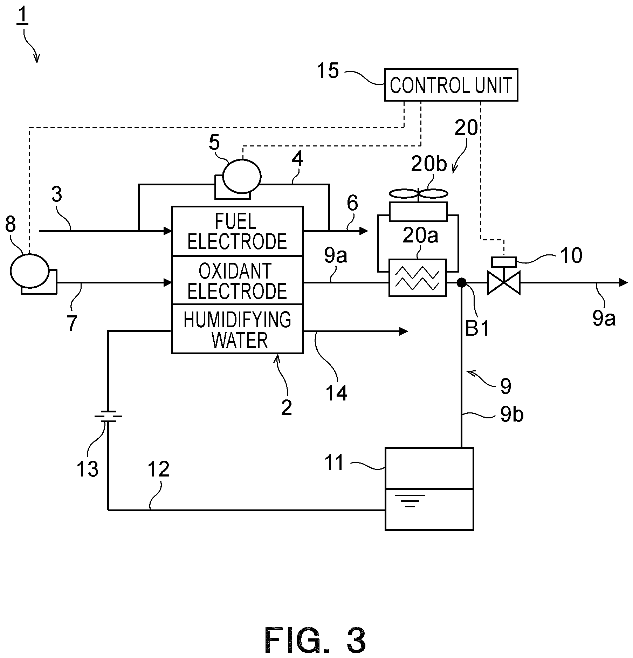

In the aforementioned embodiment, an example in which the humidifying water tank 11 is supplied with the humidifying water from the humidifying water supply unit, not shown, is described. However, this embodiment is not limited thereto. For example, as shown in Fig. 3, the humidifying water supply unit may include the oxidant gas cooling apparatus 20 provided on the oxidant gas discharge line 9. The oxidant gas cooling apparatus 20 may be controlled by the control unit 15.

As shown in Fig. 3, the fuel cell system 1 further includes the oxidant gas cooling apparatus 20 that cools the oxidant gas flowing through the discharge main line 9a of the oxidant gas discharge line 9 to generate condensed water. The oxidant gas cooling apparatus 20 may be located on the discharge main line 9a of the oxidant gas discharge line 9 at a position upstream the branch point B1. The oxidant gas cooling apparatus 20 includes a heat exchanger 20a located on the discharge main line 9a, and a medium cooler 20b. A pump, not shown, circulates a cooling medium through the heat exchanger 20a and the medium cooler 20b, so that the oxidant gas flowing through the discharge main line 9a can be cooled. Since the oxidant gas contains moisture, condensed water is generated when it is cooled. Examples of the medium cooler 20b may be a cooling tower, a chiller, a radiator, etc.

The condensed water generated in the oxidant gas cooling apparatus 20 is supplied to the humidifying water tank 11. For example, the discharge main line 9a, the branch line 9b, and the humidifying water tank 11 may be configured such that the condensed water flows therethrough due to the effect of gravity. This allows the condensed water to be supplied into the humidifying water tank 11, so that the condensed water is stored as humidifying water to prevent running out of the humidifying water.

Alternatively, the humidifying water tank 11 may be connected to a part of the oxidant gas discharge line 9, which is upstream of the first gas pressure regulation valve 10. Namely, the humidifying water tank 11 may be directly connected to the discharge main line 9a at an intermediate position of the discharge main line 9a without intervening the branch line 9b. In this case, the humidifying water tank 11 may have a large opening which is formed as an inlet port of the oxidant gas supplied from the discharge main line 9a. This allows the condensed water to be separated from the oxidant gas, while the oxidant gas passes through the gas phase in the humidifying water tank 11. Namely, the humidifying water tank 11 can have a gas-liquid separation function. The separated condensed water can be stored as humidifying water in the humidifying water tank 11. The oxidant gas from which the condensed water has been separated is discharged outside the fuel cell system 1 from the humidifying water tank 11 through the first gas pressure regulation valve 10. Alternatively, when the humidifying water tank 11 is directly connected to the discharge main line 9a, a gas-liquid separator capable of centrifugally separating the condensed water may be attached to the humidifying water tank 11. Also in this case, the condensed water can be separated from the oxidant gas while the oxidant gas passes through the gas phase in the humidifying water tank 11.

When the operation of the fuel cell system 1 is stopped, the oxidant gas cooling apparatus 20 may be stopped. This can stop supply of the condensed water to the humidifying water tank 11. Thus, by continuously driving the aforementioned oxidant gas blower 8, the oxidant gas can be supplied from the humidifying water tank 11 to the humidifying water supply line 12 and the humidifying water can be discharged from the humidifying water supply line 12, the humidifying water path 38 of the fuel cell stack 2, and the humidifying water discharge line 14.

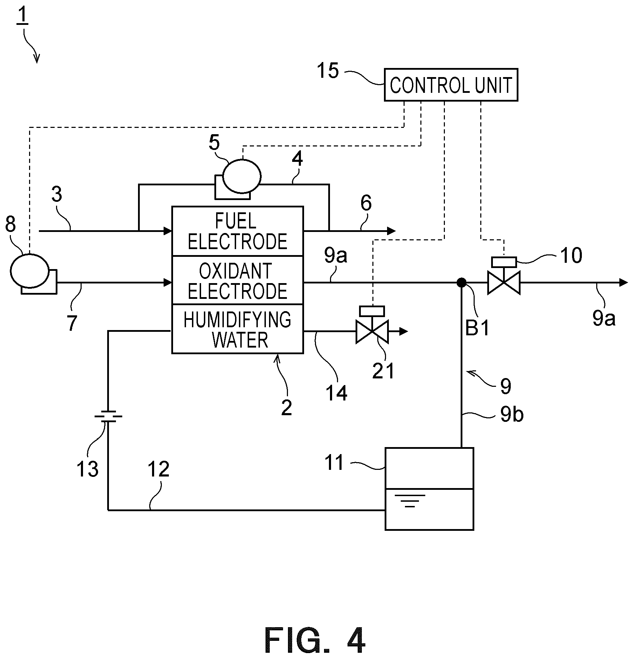

In addition, in the aforementioned embodiment, as shown in Fig. 4, the humidifying water discharge line 14 may be provided with a humidifying water flowrate regulation valve 21. The humidifying water flowrate regulation valve 21 regulates a flowrate of the humidifying water in the humidifying water discharge line 14. Thus, a flowrate of the humidifying water discharged from the humidifying water discharge line 14 outside the fuel cell system 1 can be regulated. Thus, the example shown in Fig. 4 can reduce an amount of the humidifying water supplied to the humidifying water path 38 of the fuel cell stack 2, to prevent running out of the humidifying water in the humidifying water tank 11. The humidifying water flowrate regulation valve 21 may be controlled by the control unit 15.

The humidifying water flowrate regulation valve 21 shown in Fig. 4 may be applied to the modification example shown in Fig. 3.

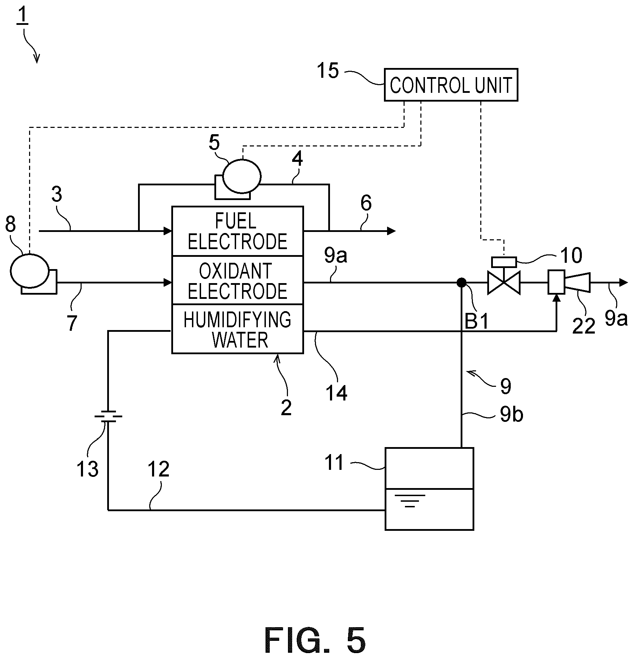

In addition, in the aforementioned embodiment, as shown in Fig. 5, the oxidant gas discharge line 9 may be provided with an ejector 22. The ejector 22 is located on the discharge main line 9a of the oxidant gas discharge line 9 at a position downstream of the first gas pressure regulation valve 10. The humidifying water discharge line 14 is coupled to the ejector 22. The ejector 22 suctions the humidifying water from the humidifying water discharge line 14 by a flow of the oxidant gas. The humidifying water joins to the flow of the oxidant gas in the ejector 22, and is discharged outside the fuel cell system 1. Thus, according to the example shown in Fig. 5, the humidifying water can be smoothly discharged by the flow of the oxidant gas from the humidifying water path 38 of the fuel cell tack 2 outside the fuel cell system 1.

The ejector 22 shown in Fig. 5 may be applied to the modification examples shown in Fig. 3 and 4.

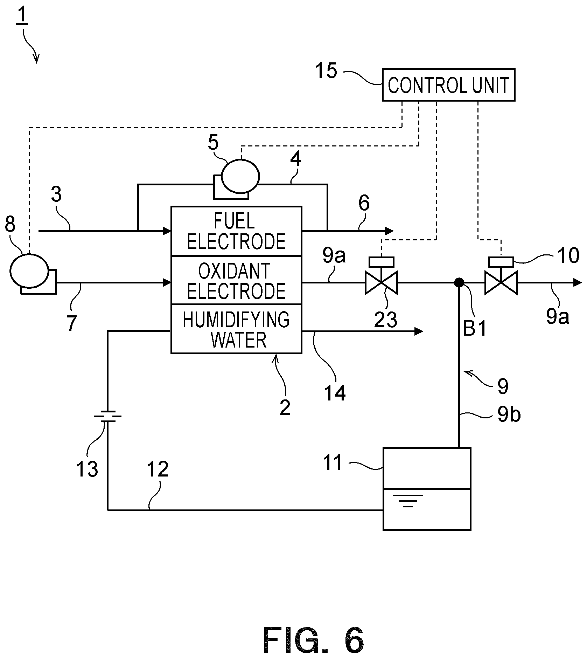

In addition, in the aforementioned embodiment, as shown in Fig. 6, a second gas pressure regulation valve 23 may be provided on the oxidant gas discharge line 9 at a position upstream of the first gas pressure regulation valve 10. the second gas pressure regulation valve 23 is an example of a second gas pressure regulation unit. The second gas pressure regulation valve 23 is located on the discharge main line 9a of the oxidant gs discharge line 9 at a position upstream of the branch point B1 from which the branch line 9b branches off. The second gas pressure regulation valve 23 can regulate a pressure of the oxidant gas in the oxidant gas path 37 of the fuel cell stack 2. Other examples of the second gas pressure regulation unit may be an orifice, a compressor for recovering power of the oxidant gas, etc., for example.

In the example shown in Fig. 6, a pressure of the oxidant gas in the branch line 9b can be regulated by the first gas pressure regulation valve 10. This allows a pressure of the oxidant gas in the oxidant gas path 37 and a pressure of the oxidant gas in the branch line 9b to be separately regulated. For example, a pressure of the oxidant gas in the branch line 9b may be made lower than a pressure of the oxidant gas in the oxidant gas path 37. In this case, a pressure of the gas phase in the humidifying water tank 11 can be reduced to decrease an amount of the humidifying water to be supplied to the humidifying water path 38 of the fuel cell stack 2. This can prevent running out of the humidifying water in the humidifying water tank 11. The second gas pressure regulation valve 23 may be controlled by the control unit 15.

The second gas pressure regulation valve 23 shown in Fig. 6 may be applied to the modification examples shown in Figs. 3 to 5.

### (Second Embodiment)

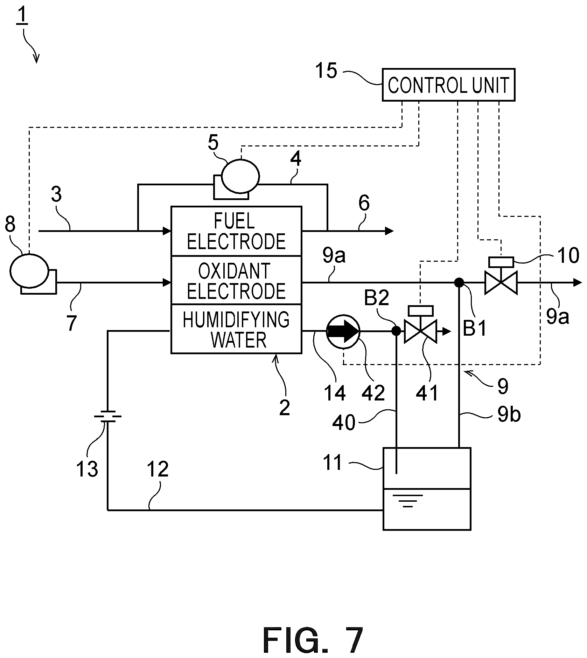

Next, a fuel cell system according to a second embodiment is described using Fig. 7.

The second embodiment shown in Fig. 7 differs from the first embodiment shown in Figs. 1 and 2 mainly in that a humidifying water return line branches off from the humidifying water discharge line, and is substantially the same as the first embodiment. In Fig. 7, the same reference numerals are used for the same parts as in the first embodiment shown in Figs. 1 and 2, and detailed description thereof is omitted.

As shown in Fig. 7, the fuel cell system 1 according to this embodiment further includes a humidifying water return line 40, a humidifying water discharge valve 41, and a humidifying water pump 42.

The humidifying water return line 40 branches off from the humidifying water discharge line 14 to be connected to the humidifying water tank 11. The humidifying water return line 40 connects the humidifying water discharge line 14 and a gas phase part of the humidifying water tank 11, and is capable of discharging the humidifying water in the humidifying water discharge line 14 to the humidifying water tank 11.

The humidifying water discharge valve 41 is located on the humidifying water discharge line 14 at a position downstream of a branch point B2 from which the humidifying water return line 40 branches off. The humidifying water discharge valve 41 may be an opening and closing valve. The humidifying water discharge valve 41 is opened when the humidifying water is discharged, and the humidifying water discharge valve 41 is closed when no humidifying water is discharged. The opening and closing of the humidifying water discharge valve 41 is controlled by the control unit 15.

The humidifying water pump 42 supplies the humidifying water discharged from the fuel cell stack 2 to the humidifying water tank 11. The humidifying water pump 42 increases a pressure of the humidifying water to a pressure higher than a pressure of the gas phase in the humidifying water tank 11 to supply the humidifying water to the humidifying water tank 11. The humidifying water pump 42 may be located on the humidifying water discharge line 14 at a position upstream of the branch point B2 form which the humidifying water return line 40 branches off. However, the humidifying water pump 42 may be located on the humidifying water return line 40.

During the operation of the fuel cell system 1, the humidifying water discharge valve 41 is closed. This allows the humidifying water discharged from the humidifying water path 38 of the fuel cell stack 2 to be supplied to the humidifying water tank 11 through the humidifying water return line 40. Since the humidifying water can be circulated, running out of the humidifying water can be prevented.

When the operation of the fuel cell system 1 is stopped, the humidifying water pump 42 is stopped and the humidifying water discharge valve 41 is opened. The oxidant gas blower 8 may continuously supply the oxidant gas under the control of the control unit 15. This maintains a pressure of the gas phase in the humidifying water tank 11, so that the humidifying water is supplied from the humidifying water tank 11 to the humidifying water supply line 12. Since the humidifying water pump 42 is stopped and the humidifying water discharge valve 14 is open, an amount of the humidifying water stored in the humidifying water tank 11 gradually decreases, and finally no humidifying water is supplied from the humidifying water tank 11 to the humidifying water supply line 12. Thereafter, the oxidant gas is supplied from the humidifying water tank 11 to the humidifying water supply line 12 by a pressure of the gas phase in the humidifying water tank 11. Thus, the humidifying water is discharged from the humidifying water supply line 12, the humidifying water path 38 of the fuel cell stack 2, and the humidifying water discharge line 14. Since the humidifying water return line 40 is connected to the gas phase part of the humidifying water tank 11, the humidifying water in the humidifying water return line 40 is discharged by a pressure of the gas phase from the humidifying water discharge line 14.

According to this embodiment, the humidifying water return line 40 that branches off from the humidifying water discharge line 14 is connected to the humidifying water tank 11, and the humidifying water discharge valve 41 is located on the humidifying water discharge line 14 at a position downstream of the branch point B2 from which the humidifying water return line 40 branches off. The humidifying water discharged from the fuel cell stack 2 can be supplied to the humidifying water tank 11 by the humidifying water pump 42. This can recycle the humidifying water to prevent running out of the humidifying water in the humidifying water tank 11.

In the aforementioned embodiment, an example in which the humidifying water discharge valve 41 is an opening and closing valve. However, this embodiment is not limited thereto. For example, the humidifying water discharge valve 41 may be a flowrate regulation valve capable of regulating a discharge flowrate of the humidifying water. In this case, similarly to the the humidifying water flowrate regulation valve 21 shown in Fig. 4, the humidifying water discharge valve 41 can regulate a flowrate of the humidifying water to be discharged from the humidifying water discharge line 14 outside the fuel cell system 1. Also in this case, the humidifying water discharge valve 41 may be controlled by the control unit 15.

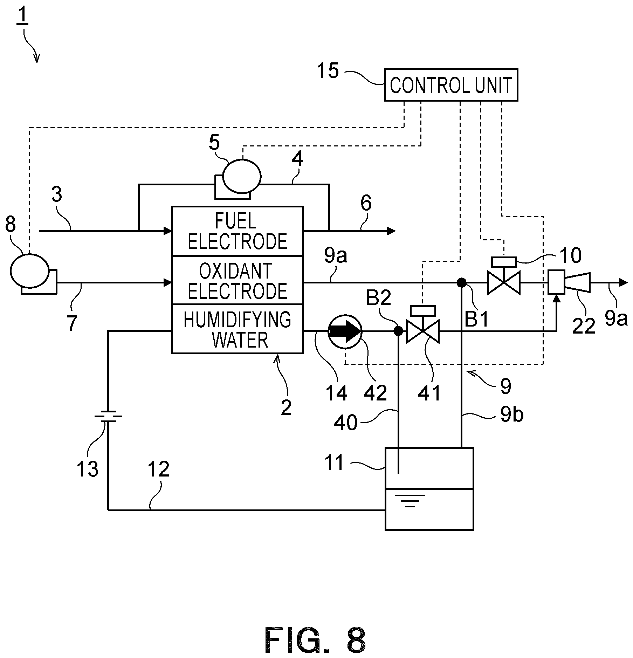

In addition, in the aforementioned embodiment, as shown in Fig. 8, the oxidant gas discharge line 9 may be provided with an ejector 22. The ejector 22 may have the same structure and the same function as the ejector 22 shown in Fig. 5.

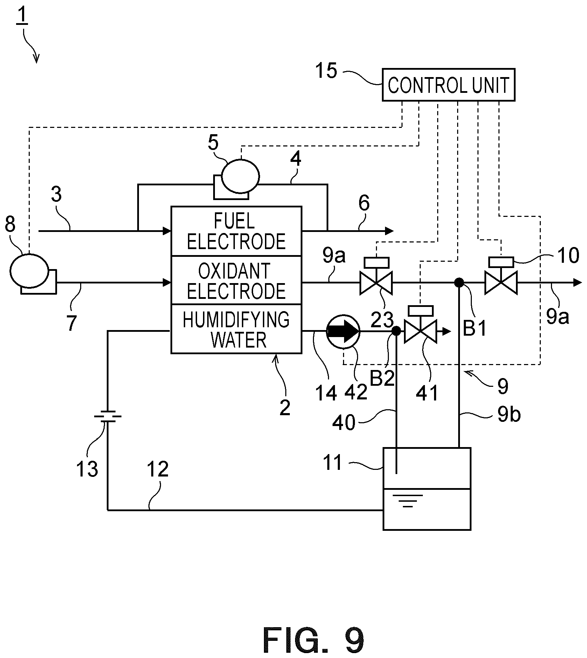

In addition, in the aforementioned embodiment, as shown in Fig. 9, the oxidant gas discharge line 9 may be provided with a second gas pressure regulation valve 23. The second gas pressure regulation valve 23 may have the same structure and the same function as the second gas pressure regulation valve 23 shown in Fig. 6.

The second gas pressure regulation valve 23 shown in Fig. 9 may be applied to the modification example shown in Fig. 8.

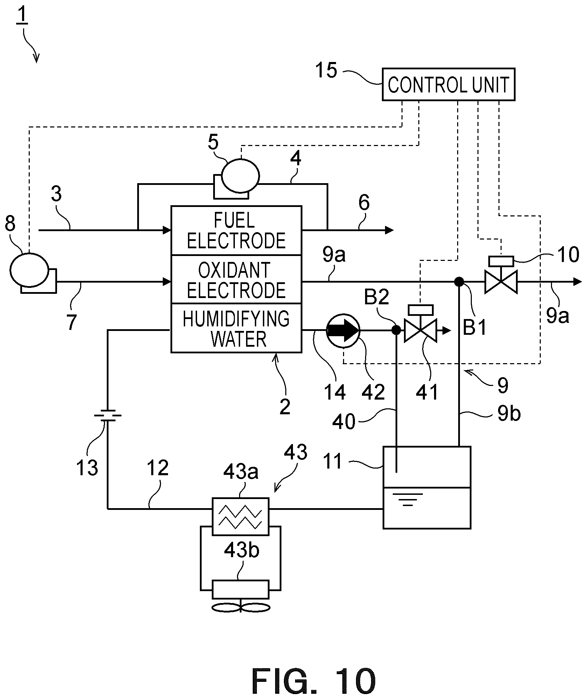

In addition, in the aforementioned embodiment, as shown in Fig. 10, the humidifying water may be cooled by a humidifying water cooling apparatus 43. The humidifying water cooling apparatus 43 may be controlled by the control unit 15.

As shown in Fig. 10, the fuel cell system 1 further includes the humidifying water cooling apparatus 43 that cools the humidifying water to be supplied from the humidifying water tank 11 to the humidifying water path 38 of the fuel cell stack 2. The humidifying water cooling apparatus 43 may be provided on the humidifying water supply line 12. More specifically, the humidifying water cooling apparatus may be located on the humidifying water supply line 12 at a position between the humidifying tank 11 and the pressure loss unit 13. The humidifying water cooling apparatus 43 includes a heat exchanger 43a located on the humidifying water supply line 12, and a medium cooler 43b. A pump, not shown, circulates a cooling medium through the heat exchanger 43a and the medium cooler 43b, so that the humidifying water flowing through the humidifying water supply line 12 can be cooled. Since the humidifying water is circulated, the humidifying water can be cooled even when it has an increased temperature, whereby the fuel cell stack 2 can be cooled effectively. The humidifying water cooling apparatus 43 may have the same structure as the oxidant gas cooling apparatus 20 shown in Fig. 3.

The humidifying water cooling apparatus 43 shown in Fig. 10 may be applied to the modification examples shown in Figs. 8 and 9.

The aforementioned embodiments can prevent damage caused by freezing and expansion of the humidifying water.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the sprit of the inventions. The accompanying claims and their equivalents are intended to cover such forms or modifications as would fail within the scope and spirit of the invention.

## Claims

1. A fuel cell system comprising:
a fuel cell stack to which a fuel gas and an oxidant gas are supplied to generate power;
an oxidant gas supply and drive unit that supplies the fuel cell stack with the oxidant gas;
an oxidant gas discharge line that discharges the oxidant gas from the fuel cell stack;
a first gas pressure regulation unit that regulates a pressure of the oxidant gas in the oxidant gas discharge line;
a sealable humidifying water tank connected to a part of the oxidant gas discharge line, which is upstream of the first gas pressure regulation unit, the humidifying water tank storing humidifying water to be supplied to the fuel cell stack;
a humidifying water supply line that supplies the humidifying water from the humidifying water tank to the fuel cell stack; and
a humidifying water discharge line that discharges the humidifying water from the fuel cell stack outside the fuel cell system.

2. The fuel cell system according to claim 1, further comprising a pressure loss unit provided on the humidifying water supply line to reduce a pressure of the humidifying water.

3. The fuel cell system according to claim 1 or 2,
the oxidant gas discharge line includes a discharge main line that discharges the oxidant gas from the fuel cell stack outside the fuel cell system, and a branch line that branches off from the discharge main line to be connected to the humidifying water tank; and
the first gas pressure regulation unit is located on the discharge main line at a position downstream of a branch point from which the branch line branches off.

4. The fuel cell system according to any one of claims 1 to 3, further comprising an oxidant gas cooling apparatus provided on the oxidant gas discharge line, the oxidant gas cooling apparatus cooling the oxidant gas to generate condensed water,
wherein the condensed water generated in the oxidant gas cooing apparatus is supplied to the humidifying water tank.

5. The fuel cell system according to any one of claims 1 to 4, further comprising a humidifying water flowrate regulation valve provided on the humidifying water discharge line to regulate a flowrate of the humidifying water.

6. The fuel cell system according to any one of claims 1 to 5, further comprising an ejector located on the oxidant gas discharge line at a position downstream of the first gas pressure regulation unit, with the humidifying water discharge line being coupled to the ejector,
wherein the ejector suctions the humidifying water from the humidifying water discharge line by a flow of the oxidant gas.

7. The fuel cell system according to any one of claims 1 to 6, further comprising a second gas pressure regulation unit located on the oxidant gas discharge line at a position upstream of the first gas pressure regulation unit, the second gas pressure regulation unit regulating a pressure of the oxidant gas in the fuel cell stack.

8. The fuel cell system according to any one of claims 1 to 3, further comprising:
a humidifying water return line that branches off from the humidifying water discharge line to be connected to the humidifying water tank;
a humidifying water discharge valve located on the humidifying water discharge line at a position downstream of a branch point from which the humidifying water return line branches off; and
a humidifying water pump that supplies the humidifying water discharged from the fuel cell stack to the humifying water tank.

9. The fuel cell system according to claim 8, wherein
the humidifying water discharge valve is capable of regulating a discharge flowrate of the humidifying water.

10. The fuel cell system according to claim 8 or 9, further comprising an ejector located on the oxidant gas discharge line at a position downstream of the first gas pressure regulation unit, with the humidifying water discharge line being coupled to the ejector,
wherein the ejector suctions the humidifying water from the humidifying water discharge line by a flow of the oxidant gas.

11. The fuel cell system according to any one of claims 8 to 10, further comprising a second gas pressure regulation unit located on the oxidant gas discharge line at a position upstream of the first gas pressure regulation unit, the second gas pressure regulation unit regulating a pressure of the oxidant gas in the fuel cell stack.

12. The fuel cell system according to any one of claims 8 to 11, further comprising a humidifying water cooling apparatus that cools the humidifying water to be supplied from the humidifying water tank to the fuel cell stack.
